# EUROPEAN PATENT APPLICATION

(11) **EP 3 404 553 A1**
(43) Date of publication of application: **21.11.2018**
(21) Application number: 16885215.0
(22) Date of filing: 29.09.2016
(51) Int. Cl.: G06F 17/27, G06F 17/20, G06N 5/02, G06F 17/30, G10L 15/183

(54) **OPEN INFORMATION EXTRACTION METHOD AND SYSTEM FOR EXTRACTING REIFIED TERNARY RELATIONSHIP**

(30) Priority: 11.01.2016 KR 20160003230; 07.06.2016 KR 20160070465
(71) Applicant: Korea Advanced Institute of Science and Technology, Daejeon 34141 (KR)
(72) Inventor: CHOI, Key-Sun, Daejeon 34141 (KR); NAM, Sangha, Daejeon 34141 (KR); HAHM, Young Gyun, Daejeon 34141 (KR)
(74) Representative: ABG Intellectual Property, S.L.
(86) International application number: PCT/KR2016/010902
(87) International publication number: WO 2017/122904

(57) **Abstract**

Disclosed herein are an open information extraction method and system for reified ternary relationship extraction. A method implemented by a computer includes receiving text as tan information extraction target, extracting an argument and predicate included in the text, and representing the argument and predicate as a ternary relationship of a resource description framework (RDF).

## Description

### BACKGROUND OF THE INVENTION

### 1. Technical Field

The following description relates to a technology for extracting information from text.

### 2. Description of the Related Art

Today, with the growth of the Internet, a variety of types of information are provided through websites. In a current web, a user has to access a site and perform search along links until the user reaches a desired destination. However, it is more effective to make inquiry rather than to read all of numerous web pages. For inquiry, it is necessary to extract information included in a web page and convert the information into structured data or semi-structured data.

Many web information extraction tools are now present. They are basically classified into an automatic extraction tool and a manual extraction tool. If a web page consists of structured data according to a predetermined schema, automatic extraction is possible, but many web pages have a form of unstructured data not having a predetermined schema. As described above, in the case of unstructured data, a user needs to specify the schema of data to be extracted. An extraction rule is necessary to extract data of the schema specified by the user.

Most of conventional methods for extracting information from a web page have a problem in that transplant into another domain is not easy because the methods use an information extraction method dependent on a specific domain. A prior art patent "System and method for extracting domain information in unstructured web documents" (Application Number 10-2005-0063896) discloses a domain-based information extraction method for training an information extraction rule from an unstructured web document including atypical data classified for each domain and automatically extracting major information from a web document of a specific domain using the information extraction rule. Most of information extraction technologies use a method of mapping specific domain ontology to a specific class with respect to text within a specific domain.

### SUMMARY OF THE INVENTION

Embodiments provide a method and system capable of extracting information from all of types of text using a full open information extraction method of a form applicable to all of domains not a specific domain.

Embodiments provide an open method and system for information extraction through interpretation into a consistent ternary relationship for a linguistic structure when extracting new knowledge using text as a knowledge source.

Embodiments provide a method and system for representing all of predicate-argument relationships within text into a resource description framework (RDF) ternary relationship, that is, a knowledge representation language, by reifying the predicate-argument relationships through open information extraction.

Embodiments provide a method and system capable of facilitating knowledgebase integration and query processing by reifying all of types of information that may be extracted from text into ternary relationships.

There is provided a method implemented by a computer, including receiving text as tan information extraction target, extracting an argument and predicate included in the text, and representing the argument and predicate as a ternary relationship of a resource description framework (RDF).

According to an aspect, extracting the argument and predicate may include extracting all of arguments and predicates included in the text in a phrase unit.

According to another aspect, the method further includes analyzing a construction structure between the argument and the predicate. Representing the argument and predicate may include representing a relationship between the argument and the predicate as the ternary relationship based on the construction structure between the argument and the predicate.

According to yet another aspect, the method further includes analyzing a construction structure between the argument and the predicate. Representing the argument and predicate may include representing a relationship between the argument and the predicate as the ternary relationship according to a ternary relationship transformation rule corresponding to the construction structure.

According to yet another aspect, analyzing the construction structure may include analyzing the dependency of each argument on the predicate with respect to the arguments.

According to yet another aspect, the method further includes determining an argument belonging to the arguments and corresponding to a subject. Representing the argument and predicate may include representing a core ternary relationship including the subject with respect to a relationship between the argument and the predicate and representing the ternary relationship in which relationships between remaining arguments and predicate have been reified based on the core ternary relationship.

According to yet another aspect, representing the argument and predicate may include representing a core ternary relationship including a core subject, a core verb and a core object with respect to a relationship between the argument and the predicate and representing the ternary relationship in which relationships between remaining arguments and predicate have been reified based on the core ternary relationship.

There is provided a system implemented by a computer, including at least one processor implemented to execute a computer-readable instruction and configured to receive text as tan information extraction target, extract an argument and predicate included in the text, and represent the argument and predicate as a ternary relationship of a resource description framework (RDF).

### BRIEF DESCRIPTION OF THE DRAWINGS

FIG. 1 is a block diagram for illustrating the internal configuration of an open information extraction system according to an embodiment of the present invention.
FIG. 2 is a flowchart showing an open information extraction method according to an embodiment of the present invention.
FIGS. 3 to 5 show examples of a process of representing information within text in the form of a reified ternary relationship in an embodiment of the present invention.
FIGS. 6 to 12 are exemplary diagrams for illustrating a ternary relationship transformation rule according to a construction structure in an embodiment of the present invention.

### DETAILED DESCRIPTION

Embodiments of the present invention are described in detail with reference to the accompanying drawings.

The present embodiments relates to a technology for extracting information from text, and more particularly, to a method and system for extracting information by transforming all of predicate-argument relationships within text into knowledge. This may be applied to various fields, such as a knowledgebase construction, a question and answer system, and a knowledge-based decision making system (e.g., medical healthcare, legal expert knowledge, and decision making support).

The present invention provides an open information extraction scheme of a form applicable to all of domains not a specific domain. In particular, all of types of information within text can be extracted by extending important information about the time and space of a corresponding event related to text to a reified ternary relationship in order to prevent a loss of the important information. Furthermore, in order to prevent confusion between pieces of knowledge so that integration with the existing knowledgebase and query processing for predicates are easy, all of predicate-argument relationships within text can be represented in the form of a resource description framework (RDF) ternary relationship, that is, in a knowledge representation language, by reifying the predicate-argument relationships. Existing open information extraction is insufficient in the ability to extract and represent all of types of information meant in text because it is limited to one predicate located between two arguments, that is, binary fact extraction. However,

The RDF ternary relationship commonly has a <subject, predicate, object> structure. In this structure, a predicate means a relationship or property between an entity in a subject position and an entity or value in an object position. In this way, in the present invention, all of types of information that may be extracted from text are reified in the form of ternary relationships, thereby being capable of facilitating knowledgebase integration and query processing.

Hereinafter, an open information extraction system implemented by a computer and an open information extraction method capable of executing the open information extraction system are described more specifically.

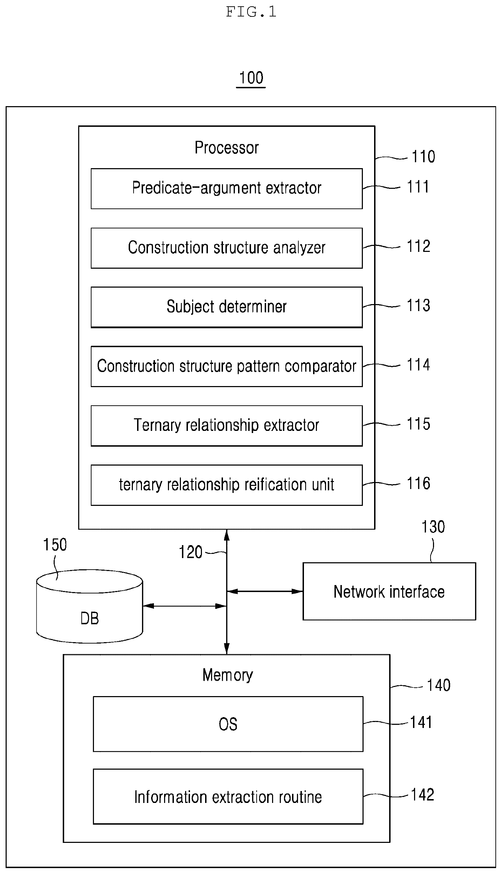

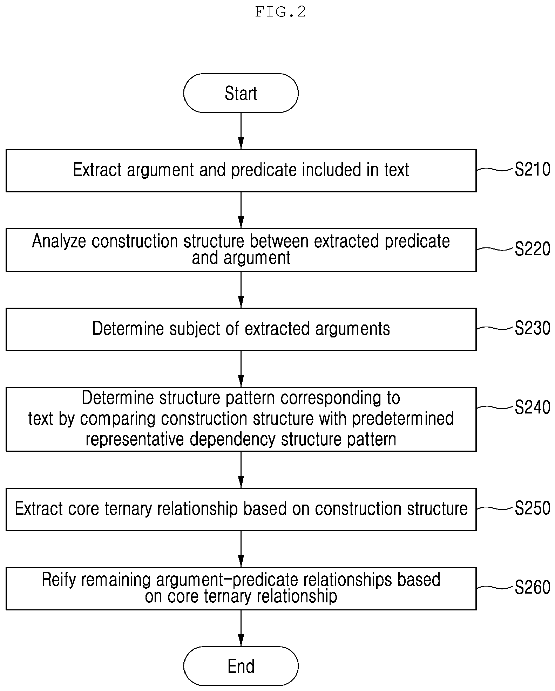

FIG. 1 is a block diagram for illustrating the internal configuration of an open information extraction system according to an embodiment of the present invention. FIG. 2 is a flowchart showing an open information extraction method according to an embodiment of the present invention.

The open information extraction system 100 according to the present embodiment may include a processor 110, a bus 120, a network interface 130, memory 140 and a database (DB) 150. The memory 140 may include an operating system (OS) 141 and an information extraction routine 142. The processor 110 may include a predicate-argument extractor 111, a construction structure analyzer 112, a subject determiner 113, a construction structure pattern comparator 114, a ternary relationship extractor 115 and a ternary relationship reification unit 116. In other embodiments, the open information extraction system 100 may include more elements than the elements of FIG. 1.

The memory 140 is a computer-readable recording medium, and may include a permanent mass storage device, such as random access memory (RAM), read only memory (ROM) or a disk drive. Furthermore, the memory 140 may store program code for the OS 141 and the information extraction routine 142. Such software elements may be loaded from a computer-readable recording medium separate from the memory 140. Such a separate computer-readable recording medium may include computer-readable recording media (not shown), such as a floppy drive, a disk, a tape, a DVD/CD-ROM drive and a memory card. In another embodiment, the software elements may be loaded onto the memory 140 through the network interface 130 not a computer-readable recording medium.

The bus 120 may enable communication and data transmission the elements of the open information extraction system 100. The bus 120 may be configured using a high-speed serial bus, a parallel bus, a storage area network (SAN) and/or other proper communication technology.

The network interface 130 may be a computer hardware element for connecting the open information extraction system 100 to a computer network. The network interface 130 may connect the open information extraction system 100 to a computer network through a wireless or wired connection. The network interface 130 may provide a function for communicating with other electronic device over a computer network. For example, the computer network may include one or more specific networks of a personal area network (PAN), a local area network (LAN), a campus area network (CAN), a metropolitan area network (MAN), a wide area network (WAN), a broadband network (BBN) and the Internet. Furthermore, the computer network may include specific one or more of network topologies, including a bus network, a star network, a ring network, a mesh network, a star-bus network, and a tree or hierarchical network, but is not limited thereto.

The DB 150 functions to store and retain data, that is, a target of information extraction, and may include natural language text that is a knowledge source. In FIG. 1, the DB 150 has been illustrated as being constructed within the open information extraction system 100, but the present invention is not limited thereto. The DB may be omitted depending on a system implementation method or environment or some of or the entire DB may be present as an external DB constructed in a separate system.

The processor 110 may be configured to process instructions of a computer program by performing basic arithmetic and logic and the I/O operations of the open information extraction system 100. The instructions may be provided from the memory 140 or the network interface 130 to the processor 110 through the bus 120. For example, the processor 110 may be configured to execute an instruction received according to program code stored in a recording device, such as the memory 140.

The processor 110 may include the predicate-argument extractor 111, the construction structure analyzer 112, the subject determiner 113, the construction structure pattern comparator 114, the ternary relationship extractor 115 and the ternary relationship reification unit 116. The processor 110 and the elements of the processor 110 may control the open information extraction system 100 by executing program code loaded onto the memory 140 so that the system performs steps S210 to S260 included in the method of FIG. 2. Such program code may be loaded from a program file to a recording device, such as the memory 140. The processor 110 and the elements of the processor 110 may be implemented to execute an instruction according to the code of at least one program stored in the memory 140. Furthermore, the elements of the processor 110 may be expressions of different functions performed by the processor 110. For example, the predicate-argument extractor 111 may be used as a functional expression in which the processor 110 operates to extract a predicate and argument from text according to the aforementioned instruction.

In step S210, the predicate-argument extractor 111 may receive an information extraction target, that is, natural language text that is a knowledge source, as input, and may extract a corresponding argument and predicate included in the text. For example, the predicate-argument extractor 111 may extract an argument and predicate, that is, basic elements for information extraction, from text in a phrase unit. For example, the predicate-argument extractor 111 may separate text in a morpheme unit, and may extract a predicate and argument based on part of speech indicative of the grammatical properties of each word with respect to the separated morphemes. A predicate forming a sentence corresponds to an element, that is, a basic frame of a sentence construction, and describes an operation, state or properties of a subject. A predicate requires other linguistic elements in order to complete a meaning indicative of the predicate, and such linguistic elements are called the argument of the predicate. For example, a vocabulary column, such as a single noun, compound noun, noun phrase or noun clause, may correspond to the argument. Furthermore, the predicate-argument extractor 111 may extract ending word and position information for a predicate included in text and postposition and position information for each argument from the input text.

In step S220, the construction structure analyzer 112 may analyze the construction structure of a predicate and argument unit extracted from the text. An inter-predicate-argument construction structure may include information regarding that each argument depends on which predicate. The construction structure analyzer 112 may analyze a dependency structure between the predicate and argument extracted from the text based on the ending word and position of the predicate and the postposition and position of the argument extracted by the predicate-argument extractor 111. For example, a predicate is extracted based on part of speech indicative of the grammatical properties of a word with respect to all of words included in text. A dependency structure between a predicate and argument can be analyzed by extracting argument elements necessary for the predicate according to an argument structure according to a grammatical form of the predicate based on such a predicate.

In step S230, the subject determiner 113 functions to determine a subject in arguments extracted from the text. For example, the subject determiner 113 may select candidate arguments (e.g., noun phrases (NP)) that belong to arguments included in text and that may become a subject, and may determine an argument that belongs to the candidate arguments and that has an argument and/or a specific postposition (e.g., " 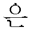 ", " 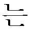 ", " 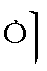 " or " 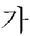 " in Korean) at the foremost position based on the postposition and position of the argument extracted from the predicate-argument extractor 111 to be a subject.

In step S240, the construction structure pattern comparator 114 may determine a structure pattern corresponding to the text by comparing the inter-predicate-argument construction structure, analyzed by the construction structure analyzer 112, with a predetermined representative dependency structure pattern. A representative structure pattern may be previously defined with respect to a dependency structure between a predicate and an argument. The construction structure pattern comparator 114 may determine that which transformation rule will be applied to input text by comparing a construction structure included in the input text with a predefined representative dependency structure pattern. The representative dependency structure pattern is to propose a transformation rule into a consistent ternary relationship according to a construction structure of text. This is described more specifically below.

In step S250, the ternary relationship extractor 115 may extract a core ternary relationship of the text based on the structure pattern corresponding to the inter-predicate-argument construction structure of the text. For example, the ternary relationship extractor 115 may extract the core ternary relationship based on a subject SBJ, a verb VP and an object OBJ, that is, core contents meant in the text. In other words, the ternary relationship extractor 115 may generate the core ternary relationship based on the subject, core verb and core object of the text. The core ternary relationship may become a base for generating a reification ternary relationship.

In step S260, the ternary relationship reification unit 116 may reify the remaining argument-predicate relationships based on the core ternary relationship extracted by the ternary relationship extractor 115. The ternary relationship reification unit 116 may represent all of inter-predicate-argument relationships, included in the text, in the form of a reified ternary relationship. That is, the reified ternary relationship means a form in which all of predicate and argument relationships of text have been reified based on the reference of the core ternary relationship.

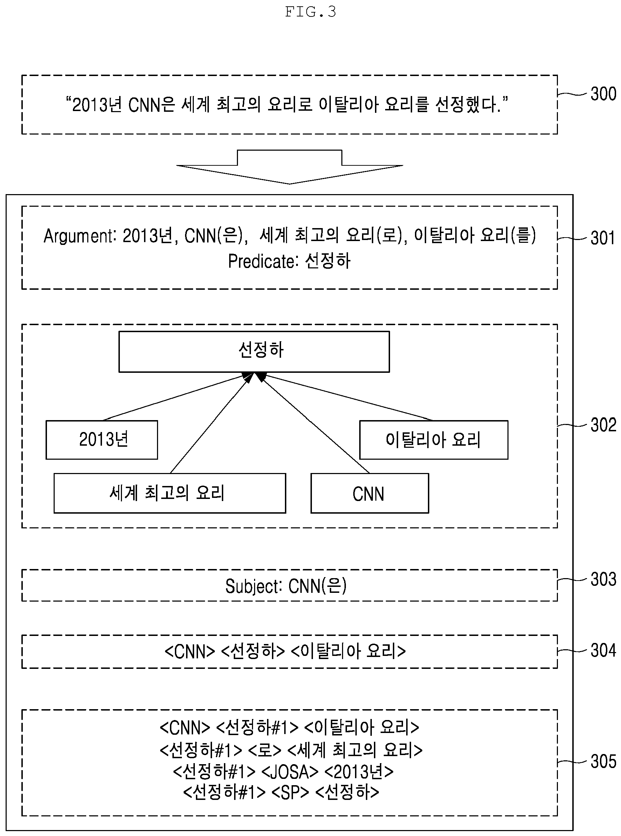

FIG. 3 shows an open information extraction process for an exemplary sentence.

It is assumed that "2013 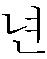 CNN 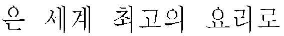 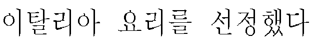 ." has been given as an input sentence 300.

The predicate-argument extractor 111 may extract all of predicates and arguments included in the input sentence 300 (301). In the input sentence 300 "2013 CNN 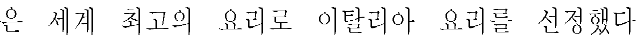 .", arguments <2013 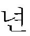 , CNN( 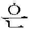 ), 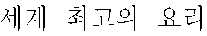 ( 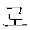 ), 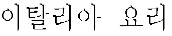 ( 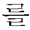 )> and a predicate < 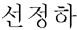 > are extracted.

The construction structure analyzer 112 may analyze a dependency structure between the predicate and arguments extracted from the input sentence 300 (302). A relationship with the predicate < 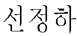 > may be represented as a dependency structure of a phrase unit with respect to the arguments <2013 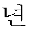 , CNN( 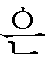 ), 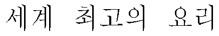 ( 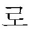 ), 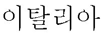 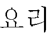 ( 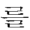 )>.

The subject determiner 113 may determine the subject of the arguments extracted from the input sentence 300 (303). The subject determiner 113 may select the core subject <CNN( 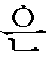 )> of the sentence from among the arguments <2013 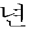 , CNN( 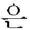 ), 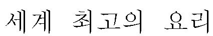 ( 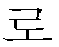 ), 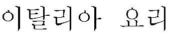 ( 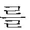 )> based on the postpositions and positions of the arguments.

The ternary relationship extractor 115 may extract a core ternary relationship of the input sentence 300 based on a structure pattern corresponding to the dependency structure between the predicate and arguments of the input sentence 300 (304). In the input sentence 300 "2013 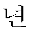 CNN 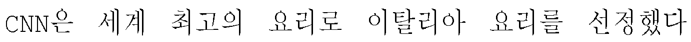 .", a subject <CNN>, a core verb < 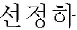 > and a core object < 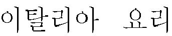 > may be represented in the form of a core ternary relationship.

The ternary relationship reification unit 116 may reify the remaining predicate-argument relationships included in the input sentence 300 based on the core ternary relationship of the input sentence 300 (305). The ternary relationship reification unit 116 may represent the remaining inter-predicate-argument relationships in the form of a reified ternary relationship, like < 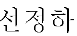 ≠1>- < 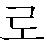 >-< 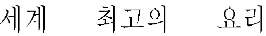 >, < 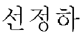 #1>-<JOSA>-<2013 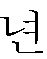 > and < 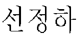 #1>-<SP>-< 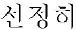 >, based on the core ternary relationship <CNN>-< 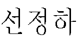 >-< 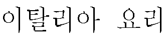 >.

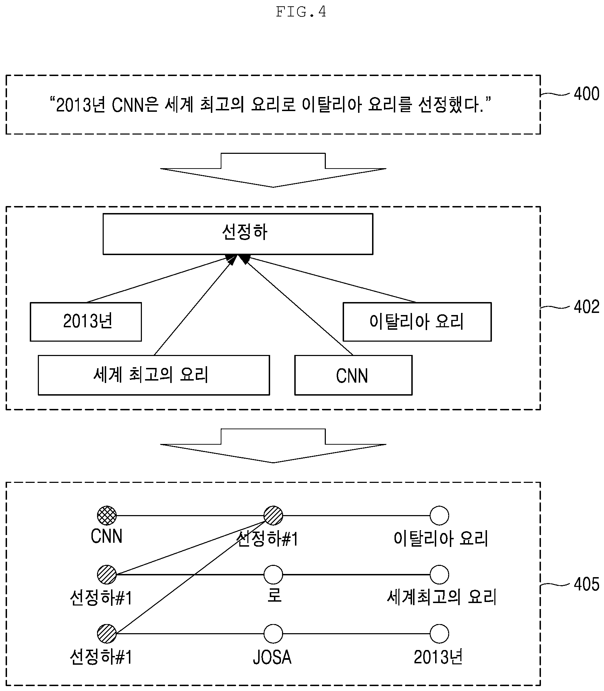

For example, referring to FIG. 4, with respect to an input sentence 400 "2013 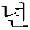 CNN 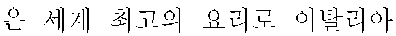 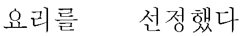 .", all of inter-predicate-argument relationships within the input sentence 400 may be represented in the form of a reified ternary relationship 405 based on the inter-predicate-argument construction structure 402 of the input sentence 400. Accordingly, since a reified ternary relationship is generated based on a construction structure of a sentence, a loss of information occurring in a syntactic word unit extraction method can be prevented through an information extraction method of a phrase unit.

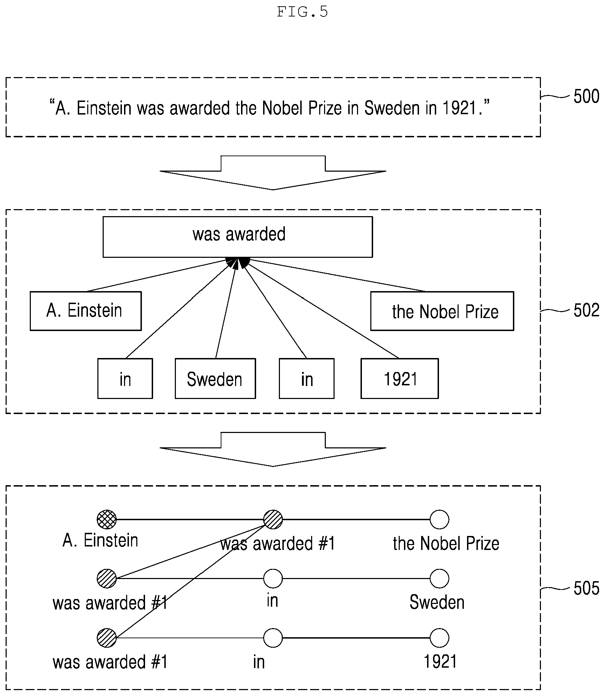

A Korean sentence has been illustrated above, but the same principle is applied to an English sentence. As shown in FIG. 5, when an English sentence 500 "A. Einstein was awarded the Nobel Prize in Sweden in 1921." is input, the inter-predicate-argument construction structure 502 of the sentence 500 may be confirmed according to a grammatical form of English. All of inter-predicate-argument relationships within the sentence 500 may be represented in the form of a reified ternary relationship 505 based on the inter-predicate-argument construction structure 502.

In an embodiment of the present invention, in order to propose a transformation rule into a consistent ternary relationship according to a construction structure of text, a construction structure pattern of the text may be divided and defined into four types of representative dependency structure patterns.

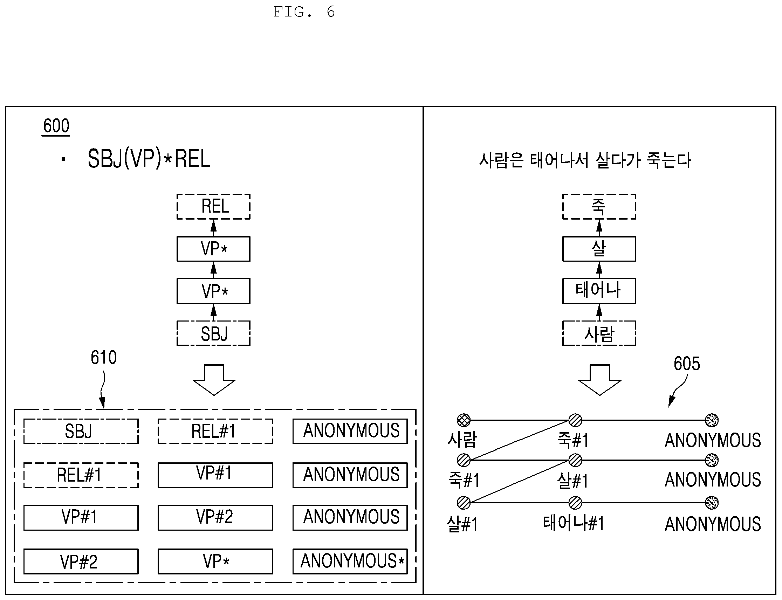

FIGS. 6 to 12 are diagrams for illustrating examples of representative dependency structure patterns.

In FIGS. 6 to 12, SBJ means a core subject, VP means a verb phrase, NP means a noun phrase, and REL means a core predicate.

FIG. 6 shows an example of a first structure pattern.

The first structure pattern 600 has a construction structure corresponding to <SBJ(VP)*REL>. A ternary relationship transformation rule 610, such as [{SBJ-REL#1-ANONYMOUS}, {REL#1-VP#1-ANONYMOUS}, {VP#1-VP#2-ANONYMOUS}, {VP#2-VP*-ANONYMOUS*}], may be defined with respect to the construction structure <SBJ(VP)*REL>. For example, in the case of a sentence " 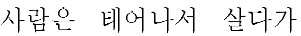 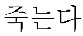 .", < 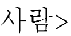 > corresponds to SBJ, < 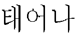 > and < 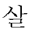 > correspond to VP, and < 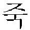 > corresponds to REL. The sentence " 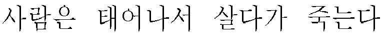 ." has the construction structure <SBJ(VP)*REL>. All of types of information SBJ, VP and REL extracted from the sentence may be represented in the form of a reified ternary relationship 605 according to the transformation rule 610 of the first structure pattern 600. In this case, after a core ternary relationship { 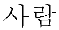 - 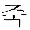 #1-ANONYMOUS} is generated with respect to the sentence " 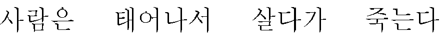 .", the relationship between all of constructions may be represented in the form of the reified ternary relationship 605, like { 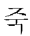 #1- 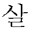 #1-ANONYMOUS}, { 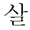 #1- 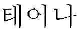 #1-ANONYMOUS}, based on the core ternary relationship.

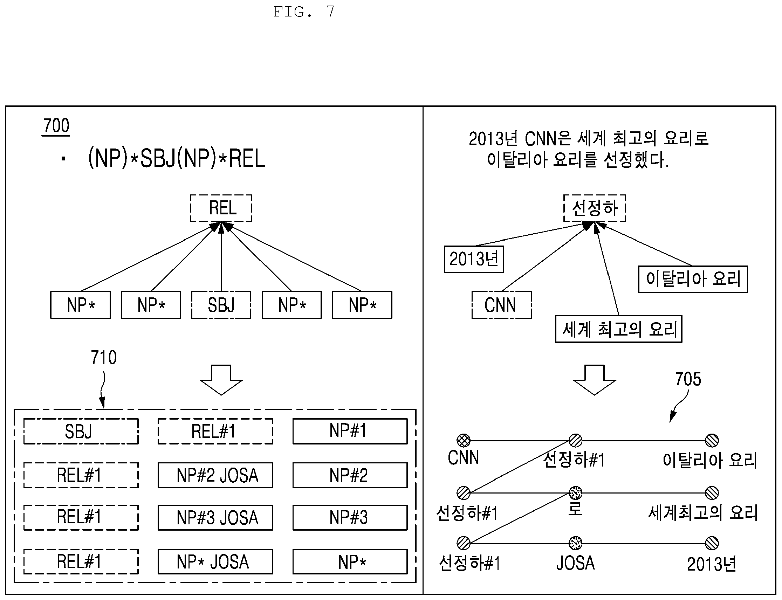

FIG. 7 shows an example of a second structure pattern.

A second structure pattern 700 has a construction structure corresponding to <(NP)*SBJ(NP)*REL>. A ternary relationship transformation rule 710, such as [{SBJ-REL#1-NP#1}, {REL#1-NP#2JOSA-NP#2}, {REL#1-NP#3JOSA-NP#3}, {REL#1-NP*JOSA-NP*}], may be defined with respect to the construction structure <(NP)*SBJ(NP)*REL>. For example, in the case of a sentence "2013 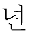 CNN 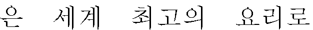 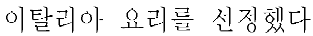 .", <CNN> corresponds to SBJ, <2013 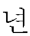 >, < 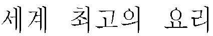 >, and < 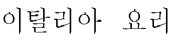 > correspond to NP, and < 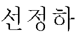 > corresponds to REL. The sentence "2013 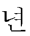 CNN 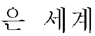 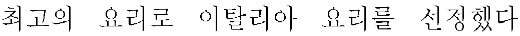 ." has the construction structure <(NP)*SBJ(NP)*REL>, and all of types of information SBJ, NP and REL extracted from the sentence may be represented in the form of a reified ternary relationship 705 according to the transformation rule 710 of the second structure pattern 700. In this case, after a core ternary relationship is generated like <CNN- 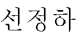 #1- 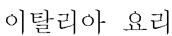 > with respect to the sentence "2013 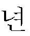 CNN 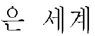 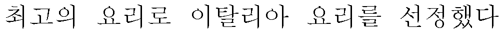 .", a relationship between all of constructions may be represented in the form of the reified ternary relationship 705, like { 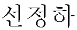 #1- 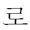 - 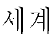 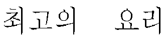 }, { 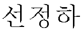 #1-JOSA-2013 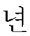 }, based on the core ternary relationship.

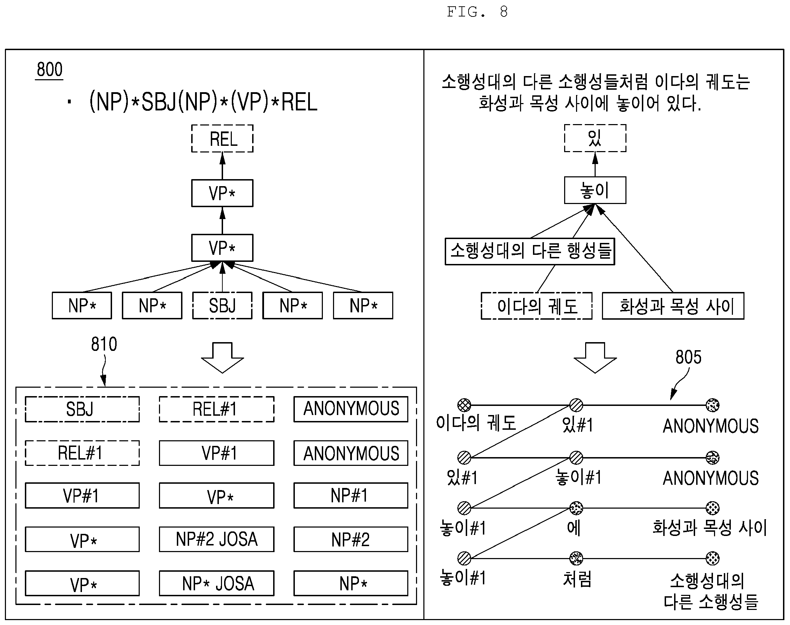

FIG. 8 shows an example of a third structure pattern.

The third structure pattern 800 has a construction structure corresponding to <(NP)*SBJ(NP)*(VP)*REL>. A ternary relationship transformation rule 810 may be defined like [{SBJ-REL#1-ANONYMOUS}, {REL#1-VP#1-ANONYMOUS}, {VP#1-VP*-NP#1}, {VP*-NP#2JOSA-NP#2}, {VP*-NP*JOSA-NP*}] with respect to the construction structure <(NP)*SBJ(NP)*(VP)*REL>. For example, in the case of a sentence " 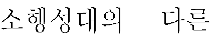 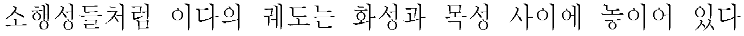 .", < 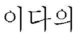 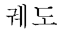 > corresponds to SBJ, < 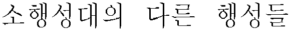 > and < 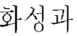 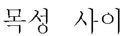 > correspond to NP, < 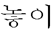 > corresponds to VP, and < 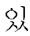 > corresponds to REL. The sentence " 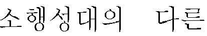 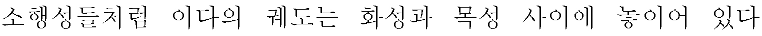 ." has a construction structure <(NP)*SBJ(NP)*(VP)*REL>. All of types of information SBJ, NP, VP and REL extracted from the sentence may be represented in the form of a reified ternary relationship 805 according to the transformation rule 810 of the third structure pattern 800. In this case, after a core ternary relationship is generated like < 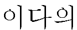 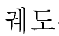 - 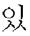 #1-ANONYMOUS> with respect to the sentence " 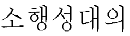 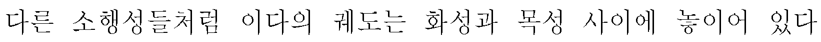 .", a relationship between all of constructions may be represented in the form of the reified ternary relationship 805 like { 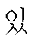 #1- 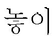 #1-ANONYMOUS}, { 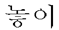 #1- 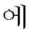 - 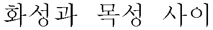 }, { 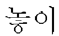 #1- 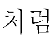 - 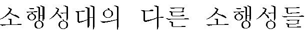 } based on the core ternary relationship.

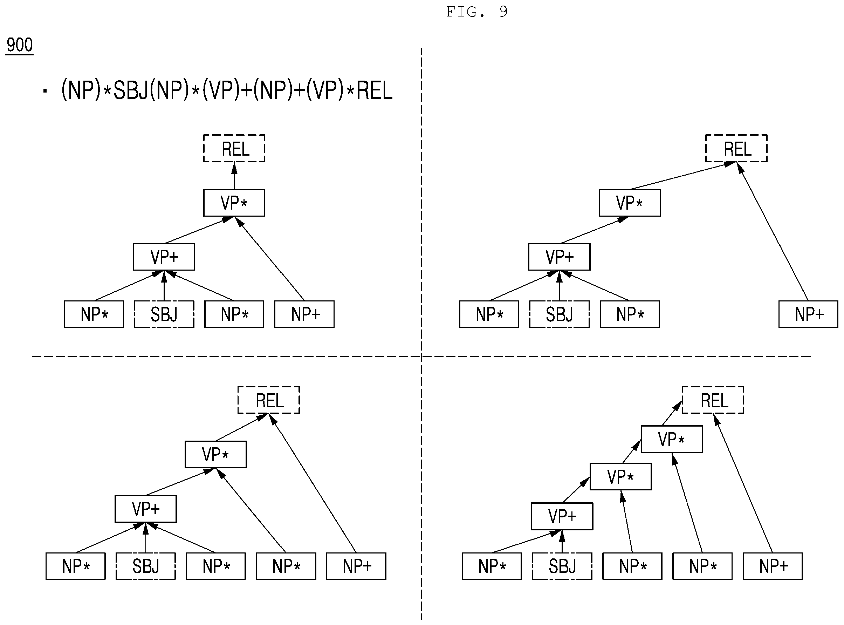

FIG. 9 shows an example of a fourth structure pattern. Referring to FIG. 9, the fourth structure pattern 900 has a construction structure corresponding to <(NP)*SBJ(NP)*(VP)+(NP)+(VP)*REL>, and may include various inter-predicate-argument dependency relationships.

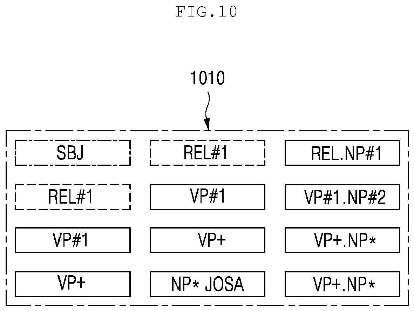

As shown in FIG. 10, a ternary relationship transformation rule 1010 [{SBJ-REL#1-REL.NP#1}, {REL#1-VP#1-VP#1.NP#2}, {VP#1-VP+-VP+.NP*}, {VP+-NP*JOSA-VP+.NP*}] may be defined with respect to the construction structure <(NP)*SBJ(NP)*(VP)+(NP)+(VP)*REL>, that is, the fourth structure pattern 900. In this case, REL.NP#1 is an expression for representing that NP#1 has been dependent on REL, VP#1.NP#2 is an expression for representing that NP#2 has been dependent on VP#1, and VP+ means that it has to appear more than once unlike VP*.

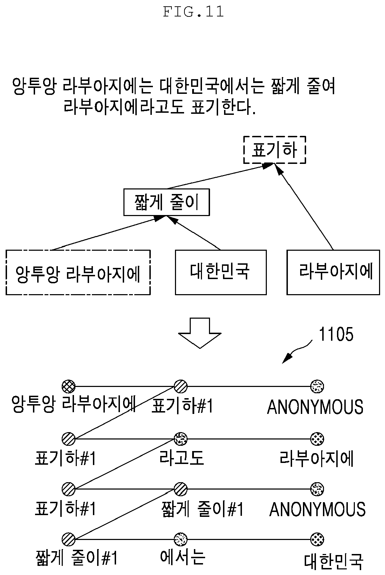

For example, referring to FIG. 11, in the case of a sentence " 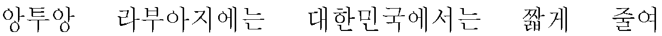 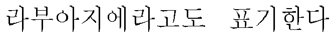 .", < 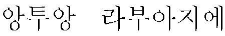 > corresponds to SBJ, < 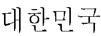 > and < 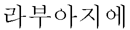 > correspond to NP, < 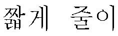 > corresponds to VP, and < 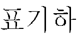 > corresponds to REL. The sentence " 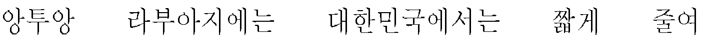 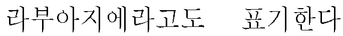 ." has a construction structure <(NP)*SBJ(NP)*(VP)+(NP)+(VP)*REL>. All of types of information SBJ, NP, VP and REL extracted from the sentence may be represented in the form of a reified ternary relationship 1105 according to the transformation rule 1010 of the fourth structure pattern 900. In this case, after a core ternary relationship is generated like < 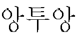 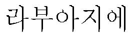 - 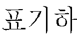 #1-ANONYMOUS> with respect to the sentence " 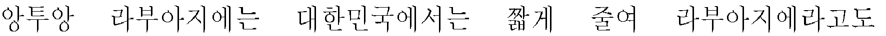 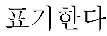 .", a relationship between all of constructions may be represented in the form of the reified ternary relationship 1105, like { 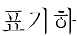 #1- 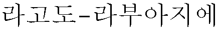 }, { 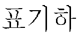 #1- 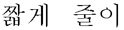 #1-ANONYMOUS}, { 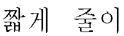 #1- 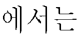 - 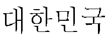 }, based on the core ternary relationship.

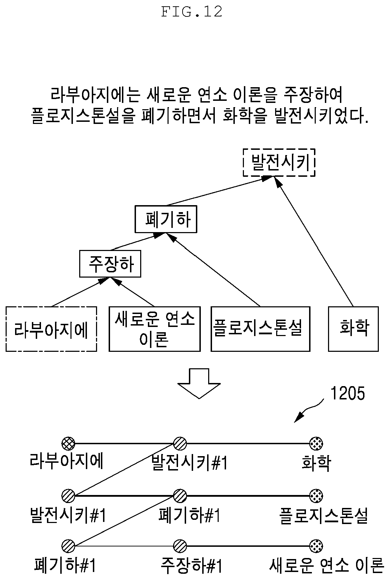

For another example, referring to FIG. 12, in the case of a sentence " 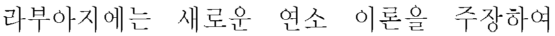 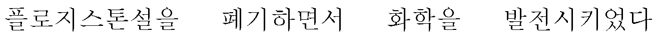 .", < 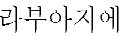 > corresponds to SBJ, < 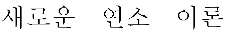 >, < 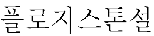 >, and < 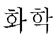 > correspond to NP, < 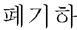 > and < 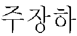 > correspond to VP, and < 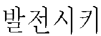 > corresponds to REL. The sentence " 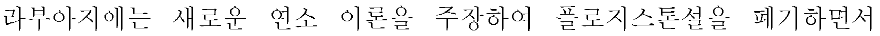 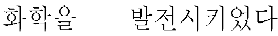 ." has a construction structure <(NP)*SBJ(NP)*(VP)+(NP)+(VP)*REL>. All of types of information SBJ, NP, VP and REL extracted from the sentence may be represented in the form of a reified ternary relationship 1205 according to the transformation rule 1010 of the fourth structure pattern 900. In this case, after a core ternary relationship is generated like < 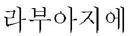 - 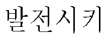 #1- 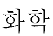 > with respect to the sentence " 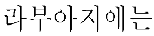 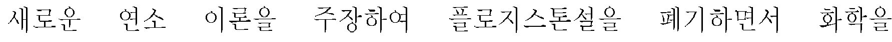 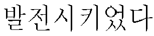 .", a relationship between all of constructions may be represented in the form of the reified ternary relationship 1205, like { 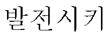 #1- 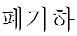 #1- 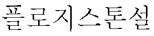 }, { 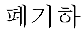 #1- 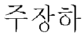 -#1- 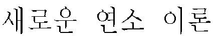 }, based on the core ternary relationship.

The aforementioned ternary relationship transformation rule according to the construction structure is determined based on a linguistic structure or a grammatical form, but the present invention is not limited thereto. The ternary relationship transformation rule may be changed in various ways.

Accordingly, the open information extraction system and method according to the present invention can consistently represent all of inter-predicate-argument relationships present within a sentence in a form of a reified ternary relationship according to a transformation rule based on a construction structure of the sentence.

As described above, according to the embodiments of the present invention, information can be extracted with respect to all of types of text using a full open information extraction method of a form applicable to all of domains not a specific domain through information extraction in an open domain.

In particular, according to the embodiments of the present invention, more information can be accurately extracted from a piece of text by proposing a method of consistently converting all of inter-predicate-argument relationships within the text into a reified ternary relationship.

Furthermore, according to the embodiments of the present invention, since information extracted from text maintains a ternary relationship, integration with other knowledgebase is easy and the information can maintain a form capable of query processing using the existing method.

Furthermore, according to the embodiments of the present invention, since information extracted from text has a reified relationship, the occurrence of confusion between pieces of knowledge can be prevented and the accuracy of query processing results can be further improved.

The apparatus described above may be implemented in the form of a combination of hardware elements, software elements, and/or hardware elements and software elements. For example, the apparatus and elements described in the embodiments may be implemented using one or more general-purpose computers or special-purpose computers, for example, a processor, a controller, an arithmetic logic unit (ALU), a digital signal processor, a microcomputer, a field programmable array (FPA), a programmable logic unit (PLU), a microprocessor or any other device capable of executing or responding to an instruction. The processing device may perform an operating system (OS) and one or more software applications executed on the OS. Furthermore, the processing device may access, store, manipulate, process and generate data in response to the execution of software. For convenience of understanding, one processing device has been illustrated as being used, but a person having ordinary skill in the art may be aware that the processing device may include a plurality of processing elements and/or a plurality of types of processing elements. For example, the processing device may include a plurality of processors or a single processor and a single controller. Furthermore, other processing configurations, such as a parallel processor, are also possible.

Software may include a computer program, code, an instruction or one or more combinations of them and may configure the processing device so that it operates as desired or may instruct the processing device independently or collectively. The software and/or data may be interpreted by the processing device or may be embodied in a machine, component, physical device, virtual equipment or computer storage medium or device of any type or a transmitted signal wave permanently or temporarily in order to provide an instruction or data to the processing device. The software may be distributed to computer systems connected over a network and may be stored or executed in a distributed manner. The software and data may be stored in one or more computer-readable recording media.

The method according to the embodiment may be implemented in the form of a program instruction executable by various computer means and stored in a computer-readable recording medium. The computer-readable recording medium may include a program instruction, a data file, and a data structure solely or in combination. The program instruction recorded on the recording medium may have been specially designed and configured for the embodiment or may be known to those skilled in computer software. The computer-readable recording medium includes a hardware device specially configured to store and execute the program instruction, for example, magnetic media such as a hard disk, a floppy disk, and a magnetic tape, optical media such as CD-ROM or a DVD, magneto-optical media such as a floptical disk, ROM, RAM, or flash memory. Examples of the program instruction may include both machine-language code, such as code written by a compiler, and high-level language code executable by a computer using an interpreter. The hardware device may be configured in the form of one or more software modules for executing the operation of the embodiment, and the vice versa.

As described above, although the embodiments have been described in connection with the limited embodiments and the drawings, those skilled in the art may modify and change the embodiments in various ways from the description. For example, proper results may be achieved although the aforementioned descriptions are performed in order different from that of the described method and/or the aforementioned elements, such as the system, configuration, device, and circuit, are coupled or combined in a form different from that of the described method or replaced or substituted with other elements or equivalents.

Accordingly, other implementations, other embodiments, and the equivalents of the claims belong to the scope of the claims.

## Claims

1. A method implemented by a computer, comprising:
receiving text as tan information extraction target;
extracting an argument and predicate included in the text; and
representing the argument and predicate as a ternary relationship of a resource description framework (RDF).

2. The method of claim 1, wherein extracting the argument and predicate comprises extracting all of arguments and predicates included in the text in a phrase unit.

3. The method of claim 1, further comprising analyzing a construction structure between the argument and the predicate, wherein representing the argument and predicate comprises representing a relationship between the argument and the predicate as the ternary relationship based on the construction structure between the argument and the predicate.

4. The method of claim 1, further comprising analyzing a construction structure between the argument and the predicate, wherein representing the argument and predicate comprises representing a relationship between the argument and the predicate as the ternary relationship according to a ternary relationship transformation rule corresponding to the construction structure.

5. The method of claim 3 or 4, wherein analyzing the construction structure comprises analyzing a dependency of each argument on the predicate with respect to the arguments.

6. The method of claim 1, further comprising determining an argument belonging to the arguments and corresponding to a subject,
wherein representing the argument and predicate comprises:
representing a core ternary relationship comprising the subject with respect to a relationship between the argument and the predicate, and
representing the ternary relationship in which relationships between remaining arguments and predicate have been reified based on the core ternary relationship.

7. The method of claim 1, wherein representing the argument and predicate comprises:
representing a core ternary relationship comprising a core subject, a core verb and a core object with respect to a relationship between the argument and the predicate, and
representing the ternary relationship in which relationships between remaining arguments and predicate have been reified based on the core ternary relationship.

8. A computer program recorded on a recording medium, wherein the computer program is coupled to a computer system to receive text as tan information extraction target, extract an argument and predicate included in the text, and represent the argument and predicate as a ternary relationship of a resource description framework (RDF).

9. A system implemented by a computer, the system comprising:
at least one processor implemented to execute a computer-readable instruction, wherein the at least one processor is configured to:
receive text as tan information extraction target,
extract an argument and predicate included in the text, and
represent the argument and predicate as a ternary relationship of a resource description framework (RDF).

10. The system of claim 9, wherein the at least one processor extracts all of arguments and predicates included in the text in a phrase unit in order to extract the argument and predicate included in the text.

11. The system of claim 9, wherein:
the at least one processor analyzes a construction structure between the argument and the predicate, and
in order to represent the ternary relationship, the at least one processor represents a relationship between the argument and the predicate as the ternary relationship based on the construction structure between the argument and the predicate.

12. The system of claim 9, wherein:
the at least one processor analyzes a construction structure between the argument and the predicate, and
in order to represent the ternary relationship, the at least one processor represents a relationship between the argument and the predicate as the ternary relationship according to a ternary relationship transformation rule corresponding to the construction structure.

13. The system of claim 11 or 12, wherein the at least one processor analyzes a dependency of each argument on the predicate with respect to the arguments in order to analyze the construction structure.

14. The system of claim 9, wherein:
the at least one processor determines an argument belonging to the arguments and corresponding to a subject, and
in order to represent the ternary relationship, the at least one processor represents a core ternary relationship comprising the subject with respect to a relationship between the argument and the predicate and represents the ternary relationship in which relationships between remaining arguments and predicate have been reified based on the core ternary relationship.

15. The system of claim 9, wherein in order to represent the ternary relationship, the at least one processor represents a core ternary relationship comprising a core subject, a core verb and a core object with respect to a relationship between the argument and the predicate and represents the ternary relationship in which relationships between remaining arguments and predicate have been reified based on the core ternary relationship.
